# EUROPÄISCHE PATENTANMELDUNG

(11) **EP 3 176 658 A1**
(43) Veröffentlichungstag der Anmeldung: **07.06.2017**
(21) Anmeldenummer: 15197609.9
(22) Anmeldetag: 02.12.2015
(51) Int. Cl.: G05B 19/406, G05B 19/418

(54) **STEUERUNGSEINHEIT UND VERFAHREN ZUR STEUERUNG EINER WERKZEUGMASCHINE SOWIE EINE VERWENDUNG**

(71) Anmelder: Siemens Aktiengesellschaft, 80333 München (DE)
(72) Erfinder: Friedrich, Ralf, 91074 Herzogenaurach (DE); Geissdörfer, Klaus, 91056 Erlangen (DE); Köpken, Hans-Georg, 91056 Erlangen (DE); Reichel, Theo, 91301 Forchheim (DE); Schäfers, Elmar, 90763 Fürth (DE)

(57) **Zusammenfassung**

Die Erfindung betrifft eine Steuerungseinheit (2) zur Steuerung einer Werkzeugmaschine (1), wobei die Steuerungseinheit (2) dazu ausgebildet ist, durch ein Steuerprogramm (10,100) einen werkstückspezifischen Bearbeitungsprozess anhand von Bearbeitungsdaten durchzuführen, wobei die für den Bearbeitungsprozess vorab definierten relevanten Bearbeitungsdaten mit einen Ortsstempel (20,200) zeitlich konsistent zu einem Bearbeitungsdatensatz (25,250) verknüpfbar sind und durch zumindest den Bearbeitungsdatensatz (25,250) ein werkstückspezifischer Fingerabdruck (30,300) des Werkstücks bestimmbar ist.

Ferner betrifft die Erfindung ein Verfahren zur Steuerung einer Werkzeugmaschine sowie eine Verwendung.

## Beschreibung

Die Erfindung betrifft eine Steuerungseinheit zur Steuerung einer Werkzeugmaschine, wobei die Steuerungseinheit dazu ausgebildet ist, durch ein Steuerprogramm einen werkstückspezifischen Bearbeitungsprozess anhand von Bearbeitungsdaten durchzuführen. Ferner betrifft die Erfindung noch ein Verfahren und eine Verwendung.

Bei Werkzeugmaschinen, Verarbeitungsmaschinen und/oder Robotern wird mit Hilfe des Steuerprogramms der Bearbeitungsprozess gesteuert. In einer Anlage zum Steuerprogramm und/oder innerhalb des Steuerprogramms werden dabei auch die für den Bearbeitungsprozess notwendigen technologischen Parameter festgelegt, wie z.B. die Spindeldrehzahl oder die Vorschubgeschwindigkeit der Maschine.

Bei der Abarbeitung des Steuerungsprogramms durch die Steuerungseinheit wird über die an der Steuerungseinheit angeschlossene Aktorik (z.B. elektrische Motoren) der Bearbeitungsprozess, z.B. bei der Fräsbearbeitung eines Werkstücks, gesteuert und über angeschlossene Sensorik präzise geregelt. Dabei entstehen in dem Steuerungssystem in unterschiedlichen zeitlichen Ebenen Daten, die wichtige Kenngrößen des Bearbeitungsprozesses beinhalten.

Es entsteht ein Datenstrom oder mehrere Datenströme, der bzw. die dann zentral erfasst und analysiert werden kann bzw. können.

Es ist ein wünschenswertes Ziel eines Anlagenbetreibers, diese Daten in Bezug auf sein produziertes Werkstück zu nutzen und zum Beispiel zur Verbesserung des Qualitätsprozesses oder der technologischen Optimierung zu nutzen.

Die erste Aufgabe der Erfindung ist daher die Angabe einer Steuerungseinheit, durch welche diese Daten hinsichtlich des Ergebnisses nutzbar sind. Die zweite Aufgabe der Erfindung ist die Angabe eines hierzu passenden Verfahrens. Eine dritte Aufgabe betrifft eine Verwendung.

Die erste Aufgabe wird gelöst durch die Angabe einer Steuerungseinheit zur Steuerung einer Werkzeugmaschine, wobei die Steuerungseinheit dazu ausgebildet ist, durch ein Steuerprogramm einen werkstückspezifischen Bearbeitungsprozess anhand von Bearbeitungsdaten durchzuführen, wobei die für den Bearbeitungsprozess vorab definierten relevanten Bearbeitungsdaten mit einem Ortsstempel konsistent zu einem Bearbeitungsdatensatz verknüpfbar sind und durch zumindest den Bearbeitungsdatensatz ein werkstückspezifischer Fingerabdruck des Werkstücks bestimmbar ist.

Die zweite Aufgabe wird gelöst durch die Angabe eines Verfahrens zur Generierung eines Bearbeitungsdatensatzes für eine Steuerungseinheit einer Werkzeugmaschine, wobei die Steuerungseinheit durch ein Steuerprogramm einen werkstückspezifischen Bearbeitungsprozess anhand von Bearbeitungsdaten durchführt, wobei die für den Bearbeitungsprozess vorab definierten relevanten Bearbeitungsdaten mit einem Ortsstempel konsistent zu einem Bearbeitungsdatensatz verknüpft werden und durch zumindest den Bearbeitungsdatensatz ein werkstückspezifischer Fingerabdruck des Werkstücks bestimmt wird.

Die dritte Aufgabe wird gelöst durch die Angabe einer Verwendung eines bestimmten werkstückspezifischen Fingerabdrucks eines Werkstücks zur Bestimmung von Abweichungen des Werkstücks.

Erfindungsgemäß wurde erkannt, dass durch die Sammlung und Übertragung von Daten in diversen, teilweise auch ungeeigneten Zeitebenen, die Konsistenz im Sinne harter Echtzeit verloren geht. Die Daten verlieren so einen wichtigen Teil ihrer Aussagekraft, die im Sinne des Prozesses jedoch notwendig ist.

Durch den werkstückspezifischen Fingerabdruck ist es also möglich, den Vergleich automatisiert in Echtzeit, d.h. während der Bearbeitung, durchzuführen und bei Abweichungen definierte Maßnahmen, wie z.B. Alarm und Bearbeitungsstopp oder Vorschubreduktion, einzuleiten. Zudem kann der Vergleich nach jeder Bearbeitung durchgeführt werden. Somit können Toleranzen und Grenzwerte ermittelt und überwacht werden. Der werkstückspezifische Fingerabdruck kann durch geeignete Visualisierung auch manuell ausgewertet werden.

Durch die Erfindung ist eine konsistente Datengenerierung, d.h. ein prozesskontextbezogene Datengenerierung bezogen auf das Werkstück, und Verarbeitung von Echtzeitprozessdaten bei der Werkstückbearbeitung mit Werkzeugmaschinen möglich.

Erfindungsgemäß entsteht ein werkstückspezifischer Fingerabdruck des Werkstücks mit allen für relevant gesehenen Prozessparametern. Der Anwender eines Produktionsprozesses kann somit aus dem werkstückspezifischen Fingerabdruck Aussagen zur Prozessstabilität, zu Bearbeitungsqualität und zum Verschleiß von Produktionsmitteln generieren.

Die Steuerungseinheit wird als zentraler Sammelpunkt für die Daten genutzt, da damit der konsistente Bezug zu Ort und Prozess gegeben ist. Zudem kann die Steuerungseinheit alle diese Daten konsistent zumindest sammeln, insbesondere speichern, weiterverarbeiten und verdichten, und mit Bezug zum Ort und Prozess ausgeben.

Durch den Ortsstempel in Werkstückkoordinaten ist daher genau bestimmbar, was wann wo am Werkstück vorgenommen wurde. Der Bearbeitungsdatensatz ist quasi werkstückabhängig und nicht steuerungs-/maschinenabhängig. Er kann daher von Werkstück auf Werkstück unabhängig von der Maschine verwendet werden. Der so gewonnen Bearbeitungsdatensatz wird somit werkstückspezifisch aufgezeichnet und gespeichert. Eine Vorverarbeitung/Nachbereitung zur Datenreduktion ist möglich. Es entsteht ein individueller, werkstückspezifischer Fingerabdruck des gefertigten Werkstückes, der vielfältig genutzt werden kann.

In den Unteransprüchen sind weitere vorteilhafte Maßnahmen aufgelistet, die beliebig miteinander kombiniert werden können, um weitere Vorteile zu erzielen.

In einer bevorzugten Ausgestaltung kann der Ortsstempel durch Werkstückkoordinaten in einem werkstückbezogenen Koordinatensystem angegeben werden. Der Ortsbezug ist dabei steuerungsseitig exakt bekannt und wird ermittelt aus Achs-Ist- und/oder Sollwerten, der im aktuellen Zustand gültigen Transformation und der gültigen Korrekturen, wie Werkzeuglänge, Kompensationen etc.. Durch den Ortsbezug kann der ermittelte werkstückspezifische Fingerabdruck in Abhängigkeit vom Werkstück angegeben werden und nicht von der Maschine.

Bevorzugt ist der Ortsstempel durch Werkstückkoordinaten in einem werkstückbezogenen Koordinatensystem als Soll- und/oder Istwert in Echtzeit verfügbar. Somit können z.B. Abweichungen durch einen sofortigen Abgleich mit Referenzdatenwerten erkannt werden. Auch kann der Ortsstempel durch Werkstückkoordinaten in einem werkstückbezogenen Koordinatensystem durch Nachbearbeitung des konsistent abgespeicherten Bearbeitungsdatensatz als Soll- und/oder Istwert errechnet werden. Dies kann auch außerhalb der Steuerungseinheit vorgenommen werden.

Bevorzugt sind die für den Bearbeitungsprozess vorab definierten relevanten Bearbeitungsdaten zusätzlich mit einem Zeitstempel zeitlich konsistent zu einem Bearbeitungsdatensatz verknüpfbar. Dieser Zeitstempel ist der Zeitpunkt, zu dem die digitale Messgröße erfasst wird. Wichtig ist hinsichtlich der Konsistenz, dass alle Messdaten sich auf denselben Anfangszeitpunkt der Aufzeichnung beziehen, z.B. der Beginn Bearbeitung. Der Zeitstempel stellt damit auch den Prozessbezug her.

Insbesondere ist eine Speichereinheit zur Speicherung des Bearbeitungsdatensatzes vorgesehen, welche in der Steuerungseinheit fest integriert ist. Dies ist vorteilhaft, da in der Steuerungseinheit ja alle Daten gesammelt werden und deshalb dort vorhanden sind. Es kann jedoch auch eine externe Speicherung vorgenommen werden.

In einer besonderen vorteilhaften Ausgestaltung ist durch ein Referenzwerkstück ein Referenzbearbeitungsdatensatz erzeugbar, mit welchem ein Referenzfingerabdruck des Referenzwerkstücks bestimmbar ist. Bevorzugt sind für den werkstückspezifischen Fingerabdruck Grenzwerte definierbar. Auch können für einen werkstückspezifischen Fingerabdruck die Grenzwerte bezogen auf das werkstückspezifische Koordinatensystem definierbar sein. Die Einhaltung der werkstückspezifischen Grenzwerte kann während der Bearbeitung durch die Steuerungseinheit überwachbar sein. In einer bevorzugten Ausgestaltung ist eine Gewährleistung der eigenständigen Einhaltung der werkstückspezifischen Grenzwerte während der Bearbeitung durch die Steuerungseinheit bewerkstelligbar. Auch kann bei Verletzung der werkstückspezifischen Grenzwerte während der Bearbeitung eine Unterbrechung der Bearbeitung durch die Steuerungseinheit erfolgen.

D.h. dass ein Fingerabdruck von einem Werkstück, das alle Qualitätsmerkmale erfüllt, als Referenz für weitere Werkstücke herangezogen werden kann. Durch Vergleich des Fingerabdrucks des aktuellen Werkstücks mit dem des Referenzwerkstücks können Abweichungen frühzeitig im Prozess frühzeitig erkannt werden. D.h. dass die Sollwerte für die Bestimmung und Regelung von Abweichungen aus dem Fingerabdruck des Referenzwerkstücks stammen und damit über dem Bearbeitungsort variieren können. D.h. auf eine feste, starre ortsunabhängige Sollwertvorgabe, wie im Stand der Technik, kann daher verzichtet werden.

Bezüglich der weiteren Auswertung sind kaum Grenzen gesetzt. So ist es, z.B. möglich, den Vergleich automatisiert in Echtzeit während der Bearbeitung durchzuführen und bei Abweichungen definierte Maßnahmen einzuleiten. Auch kann der Vergleich kann nach jeder Bearbeitung durchgeführt werden. Weiterhin können Toleranzen und Grenzwerte ermittelt und überwacht werden. Geeignete Visualisierungen können manuell ausgewertet werden.

Bevorzugt ist eine Vorverarbeitung des Bearbeitungsdatensatzes in der Steuerungseinheit vorgesehen. Dadurch kann z.B. Speicherplatz eingespart werden. Auch eine Nachverarbeitung zur Reduktion von Speicherbedarf kann jedoch möglich sein.

Bevorzugt wird der werkstückspezifische Fingerabdruck in Echtzeit errechnet. Somit kann bei auftretenden Abweichungen z.B. gleich entgegengesteuert werden.

In einer bevorzugten Ausgestaltung stehen innerhalb oder außerhalb der Steuerungseinheit Mittel zur Visualisierung des werkstückspezifischen Fingerabdrucks zur Verfügung. Der Fingerabdruck kann hierfür mit all seinen für den technologischen Prozess gehörenden Daten in einer entsprechenden Darstellung aufbereitet werden, beispielsweise als 3D Ansicht des Werkstücks mit geeigneter Darstellung des technologisch relevantem Prozessparameters. Der Technologe/Anwender kann darin mit seinem Expertenwissen und dieser Visualisierung Optimierungen vornehmen.

In einer bevorzugten Ausgestaltung sind die relevanten Bearbeitungsdaten vom Anwender festlegbar, insbesondere vorab festlegbar. Dies kann z.B. anhand des Referenzfingerabdrucks erfolgen. Dies ist insbesondere deshalb möglich, da auch der Referenzfingerabdruck lediglich vom Werkstück und nicht von der Steuerungseinheit abhängig ist.

In einer weiteren bevorzugten Ausgestaltung weist das Steuerprogramm zumindest zwei unterschiedliche Datenverarbeitungsebenen auf, welche zumindest zwei unterschiedlichen Zeitebenen zur Generierung und Bereitstellung der Bearbeitungsdaten aufweist und wobei die Bearbeitungsdaten aus den zumindest zwei unterschiedlichen Zeitebenen der Steuerung mit einem Ortsstempel konsistent zu dem Bearbeitungsdatensatz verknüpfbar sind. Dabei können die Zeitebenen zeitlich getakteten oder asynchronen Zeitebenen sein. Bevorzugt stammen die relevanten Bearbeitungsdaten aus allen vorhandenen Zeitebenen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: eine erfindungsgemäße Werkzeugmaschine mit angeschlossener externer und interner Sensorik,
- FIG 2: ein erstes Auswertungsbeispiel mit einem erfindungsgemäßen Fingerabdruck,
- FIG 3: ein Regelkreis zur eigenständigen Einhaltung der werkstückspezifischen Grenzwerte,
- FIG 4: einen erfindungsgemäßen werkstückspezifischen Fingerabdruck als 3D-Ansicht einer Spindelleistung,
- FIG 5: eine weitere erfindungsgemäße Steuerungseinheit mit einem erfindungsgemäßen Steuerprogramm.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

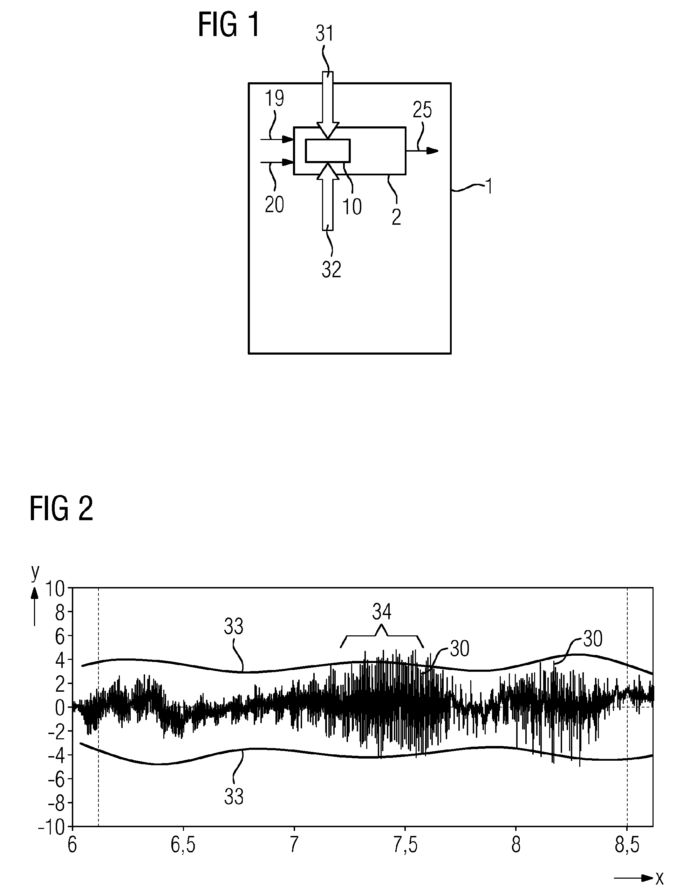

In FIG 1 ist eine Werkzeugmaschine 1 dargestellt, die eine Steuerungseinheit 2 zur Steuerung der Werkzeugmaschine 1 aufweist. Der Bearbeitungsprozess, z.B. eine Fräsbearbeitung eines Werkstücks, wird mit Hilfe eines Steuerprogramms 10, das den Bearbeitungsprozess am Bearbeitungsort, dem TCP (Tool Center Point), d.h. der Punkt, an dem das Werkzeug das Werkstück berührt, durchgeführt.

Ein Steuerprogramm 10 weist in der Regel eine Vielzahl von Daten und Datenverarbeitungsvorgängen auf, welche parallel oder nacheinander abgearbeitet werden müssen.

Dabei können in der erfindungsgemäßen Steuerungseinheit 2 bzw. dem Steuerprogramm 10 die prozessrelevanten Daten entstehen. Auch können diese durch interne Sensorik 32, z.B. die Spindelleistung, die aktuelle Position der Vorschubachse etc. und externe Sensorik 31, wie z.B. Beschleunigungssensoren vorhanden sein und gesammelt werden. Alle Signale/Messungen können dabei im Hinblick auf den TPC aufgenommen bzw. ermittelt werden. Weitere Bearbeitungsdaten sind z.B. Verwaltungsdaten, Prozessdaten, Daten mit Prozessbezug etc..

Typische Verwaltungsdaten sind z.B.:
- die Auftragsnummer,
- die Werkstücknummer,
- die Logindaten des Bedieners,
- die Uhrzeit.

Typische Prozessdaten sind z.B.:
- die Ist-Geschwindigkeit auf der Bahn,
- die Geschwindigkeiten aller Vorschubachsen,
- die Ist-Spindeldrehzahl,
- die Spindelleistung (mechanische),
- der momentenbildende Strom der Spindel,
- die Konturfehler im Werkstückkoordinatensystem,
- die Lagedifferenz einzelner Vorschubachsen,
- die Drehzahlen von Spindeln und Vorschubmotoren,
- die Regelabweichungen der Vorschubachsen (Lage, Drehzahl, Strom),
- die Kraft/Stromwerte der Vorschubachsen,
- die Kraft/Stromwerte der Spindeln,
- die Momentenauslastung der Motoren,
- die Motortemperaturen,
- die Überlagerungswerte durch die PLC (Bsp. Vorschuboverride),
- Weitere an die Steuerungseinheit 2 angeschlossene Sensorik (Bsp.: Beschleunigungen, Temperaturen, Druck).

Typische Daten mit Prozessbezug sind z.B.:
- die NC-Programmidentifikation,
- der Bezug zum NC-Programm (Satznummer),
- der NC-Satz,
- die Werkzeug-Identifikation: aktives Werkzeug (Werkzeug-Nummer, Werkzeug-Schneide),
- die geometrische Werkzeugbeschreibung: aktives Werkzeug,
- die Art der Bewegung (G1/G0) der eingeschalteten M-Funktionen,
- die programmierte Geschwindigkeit und Spindeldrehzahl.

Typische berechnete Größen aus den Prozessdaten in Kombination mit den steuerungsseitig verfügbaren Daten sind z.B.:
- die Ist-Position des TCP entsprechend der Achs-Istwerte, Dabei muss der Ortsbezug im Sinne des Istwertes im Werkstückkoordinatensystem jedoch nicht in jeder Zeitebene vorhanden sein und kann auch nach der Bearbeitung offline anhand des konsistent abgespeicherten Datensatzes errechnet werden.
- der Kraftvektor am TCP aus Strömen, Beschleunigung und ggf. Reibmodell der Vorschubachsen,
- die Abweichung am TCP aus dem Kraftvektor am TCP und der in allen kartesischen Richtungen bekannten Steifigkeit am TCP,
- die Prozesskraft, die z.B. auf die Spindel wirkt, aus dem momentenbildenden Strom und den Werkzeugdaten (z.B. Fräserradius).

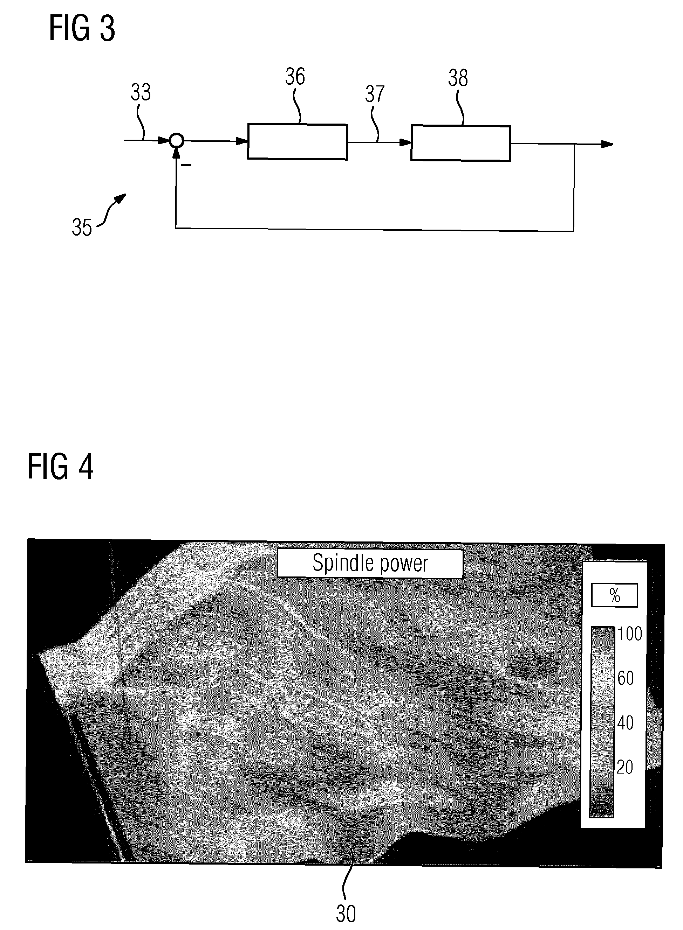

Alle Bearbeitungsdaten können mit Referenz zum TPC aufgezeichnet werden. Dadurch ist die Bestimmung des Bearbeitungsortes des Werkstücks im Verhältnis zum Steuerprogramm 10 (FIG 2) bekannt. Somit eignen sich auch z.B. der Kraftvektor, die Abweichung und die Prozesskraft zur Bildung eines Werkstücks spezifischen Fingerabdrucks 30 (FIG 2, FIG 4), wie nachfolgend beschrieben wird.

Erfindungsgemäß werden für den Bearbeitungsprozess vorab definierten relevanten Bearbeitungsdaten einem Ortsstempel 20 konsistent zu einem Bearbeitungsdatensatz 25 verknüpft. Zusätzlich zum Ortsstempel 20 ist hier im Beispiel noch ein Zeitstempel 19 vorhanden. Anschließend kann durch einen erfindungsgemäßen Bearbeitungsdatensatz 25 ein werkstückspezifischer Fingerabdruck 30 (FIG 2, FIG 4) des Werkstücks bestimmt werden.

Erfindungsgemäß wird somit ein werkstückspezifischer Fingerabdruck 30 (FIG 2, FIG 4) durch ein taktsynchrones Aufzeichnen von relevanten Bearbeitungsdaten für das bearbeitende Werkstück bestimmt. Dabei wird das taktsynchrone Aufzeichnen durch den Zeitstempel 19 und den Ortsstempel 20, mit dem die Bearbeitungsdaten versehen werden, bewerkstelligt. Durch den Zeitstempel 19 und Ortstempel 20 wird quasi ein Prozessbezug hinsichtlich des aktuell bearbeiteten Punkts im Steuerprogramm 10 hergestellt. Dabei wird der Ortsstempel 20, d.h. der Ortsbezug in Bezug auf die Werkstückkoordinaten, angegeben. Der Ortsbezug ist steuerungsseitig exakt bekannt und wird ermittelt aus Achs-Ist- oder/und Sollwerten der im aktuellen Zustand gültigen Transformation und der gültigen Korrekturen, wie z.B. Werkzeuglänge oder Kompensationen. Die für die Werkzeugmaschinenreihe relevanten werkstückspezifischen Eigenschaften (Engineering), d.h. die zu erfassenden relevanten Bearbeitungsdaten, können z.B. vom Hersteller/Betreiber vorab festgelegt werden. Auch können diese jedoch durch ein neuronales selbstlernendes System automatisch generiert werden. Die relevanten Bearbeitungsdaten können jederzeit vom Betreiber/Hersteller usw. neu definiert werden. Jedes Werkstück erhält somit im Zuge der Fertigstellung den maschinenspezifischen, werkstückspezifischen Fingerabdruck 30 (FIG 2, FIG 4).

Der Ortsstempel 20 ist dabei bevorzugt durch Werkstückkoordinaten in einem werkstückbezogenen Koordinatensystem als Soll- und/oder Istwert in Echtzeit verfügbar.

Auch kann der Ortsstempel 20 durch Werkstückkoordinaten in einem werkstückbezogenen Koordinatensystem durch Nachbearbeitung des konsistent abgespeicherten Bearbeitungsdatensatzes 25 als Soll- und/oder Istwert bestimmt bzw. errechnet werden.

Erfindungsgemäß entsteht so ein konsistenter, erfindungsgemäßer werkstückspezifischer Fingerabdruck 30 (FIG 2,FIG 4) eines Werkstücks 1, z.B. hier einer Spindel, aus den relevanten Verwaltungsdaten, hier z.B. die "globalen Daten eines Werkstücks", aus den relevanten Prozessdaten und aus den relevanten Bearbeitungsdaten mit Prozessbezug aus den unterschiedlichen Zeitebenen sowie aus den relevanten Prozessdaten in Kombination mit steuerungsseitig verfügbaren Daten berechneten Größen. Selbstverständlich ist die Aufzählung nicht abschließend, d.h. es sind weitere, hier nicht aufgezählte Daten möglich.

Auch ist zur Datenreduktion eine Vorverarbeitung der relevanten Bearbeitungsdaten oder eine Nachbearbeitung des erstellten Bearbeitungsdatensatzes 25 möglich.

Vorteilhafterweise ist eine Speichereinheit zur Speicherung des Bearbeitungsdatensatzes 25 vorgesehen, welche in der Steuerungseinheit 2 fest integriert ist. Auch kann jedoch der Bearbeitungsdatensatz 25 und oder die Bearbeitungsdaten mit Zeitstempel 19 und Ortsstempel 20 an ein externes Speicher-/Bearbeitungsmodul weitergeleitet werden.

Weiterhin ist erfindungsgemäß durch ein Referenzwerkstück ein Referenzbearbeitungsdatensatz erzeugbar, mit welchem ein Referenzfingerabdruck des Referenzwerkstücks bestimmbar ist. Dabei kann ein Referenzfingerabdruck ein Werkstück sein, bei welchem alle Qualitätsmerkmale erfüllt sind. Durch Vergleich des Referenzfingerabdrucks mit dem Fingerabdruck des aktuellen Werkstücks können z.B. Abweichungen frühzeitig erkannt werden. Es entsteht daher ein individueller, werkstückspezifischer Fingerabdruck 30 (FIG 2, FIG 4) des gefertigten Werkstücks, der für diverse weitere Schritte verwendet werden kann.

Ein werkstückspezifischer Fingerabdruck 30 (FIG 2, FIG 4) von einem Werkstück, das alle Qualitätsmerkmale erfüllt, wird somit als Referenz für weitere Werkstücke herangezogen und bildet einen werkstückspezifischen Referenzfingerabdruck. Durch Vergleich des werkstückspezifischen Fingerabdrucks 30 (FIG 2, FIG 4) des aktuellen Werkstücks mit dem werkstückspezifischen Referenzfingerabdruck können Abweichungen schon frühzeitig im Prozess erkannt werden.

Eine vorteilhafte Ausprägung der Erfindung ist dadurch gekennzeichnet, dass der werkstückspezifische Fingerabdruck 30 (FIG 2, FIG 4) in Echtzeit errechnet wird. Das heißt, dass in einer geeigneten Zeitscheibe die Prozessdaten oder die errechneten Größen in Bezug zum TCP bestimmt werden und mit vorab definierten Toleranzgrenzen verglichen werden können.

Durch den werkstückspezifischen Fingerabdruck 30 (FIG 2, FIG 4) ist es also möglich, den Vergleich automatisiert in Echtzeit während der Bearbeitung durchzuführen und bei Abweichungen definierte Maßnahmen, wie z.B. Alarm und Bearbeitungsstopp oder Vorschubreduktion, einzuleiten. Zudem kann der Vergleich nach jeder Bearbeitung durchgeführt werden. Somit können Toleranzen und Grenzwerte ermittelt und überwacht werden.

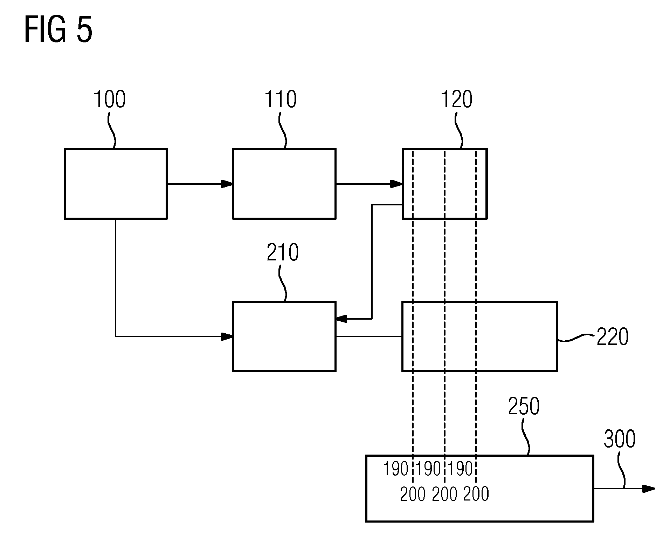

Der werkstückspezifische Fingerabdruck 30 (FIG 5) kann während der Lebenszeit der Werkzeugmaschine 1 nach einem vom Hersteller/Betreiber festgelegten Muster wiederholt werden. Die relevanten Bearbeitungsdaten können vom Hersteller und/oder Betreiber und/oder Bediener festgelegt, insbesondere vorab festlegelegt d.h. definiert werden.

Insbesondere sind für den werkstückspezifischen Fingerabdruck 30 (FIG 2, FIG 4) Grenzwerte 33 (FIG 2) definierbar. Dabei können die Grenzwerte 3 (FIG 2) für einen werkstückspezifischen Fingerabdruck 30 (FIG 2, FIG 4) bezogen auf das werkstückspezifische Koordinatensystem definiert oder anhand von diesem ermittelt werden.

Somit ist eine Überwachung der Einhaltung der werkstückspezifischen Grenzwerte 33 (FIG 2) und Toleranzen während der Bearbeitung durch die erfindungsgemäße Steuerungseinheit 2 eigenständig möglich.

Zudem wird die eigenständige Einhaltung der werkstückspezifischen Grenzwerte 33 (FIG 2) während der Bearbeitung durch das Steuerprogramm 10 der Steuerungseinheit 2 gewährleistet.

Auch ist es möglich, dass bei Verletzung der werkstückspezifischen Grenzwerte 33 (FIG 2) während der Bearbeitung eine Unterbrechung der Bearbeitung durch die Steuerungseinheit 2 erfolgt.

Es ist daher möglich, den Vergleich automatisiert in Echtzeit während der Bearbeitung durchzuführen und bei Abweichungen definierte Maßnahmen, z.B. einen Alarm oder einen Bearbeitungsstopp oder eine Vorschubreduktion, durchzuführen.

FIG 2 zeigt ein beispielhaftes Auswertungsbeispiel für die Verletzung von werkstückspezifischen Grenzwerten 33 während der Bearbeitung, d.h. für einen Vergleich von einem aktuellen Fingerabdruck 30 mit aus einem Referenzfingerabdruck generierten Grenzwerten 33. Hier wird eine Spindel als Werkzeugmaschine herangezogen. FIG 2 zeigt einen Fingerabdruck 30 der Drehschwankung der Hauptspindel (y-Achse in %) über die Bahn (x-Achse in mm). Nun kann der Hersteller/Betreiber die Schwankung der Drehzahl der Hauptspindel bei der Bearbeitung des Referenzwerkstücks aufzeichnen und - darauf bezogen - die Toleranz für seine Werkstücke definieren. D.h. der Hersteller/Betreiber definiert aus einem Referenzfingerabdruck eine Grenze 33. Durch eine Ober- und eine Untergrenze ergibt sich dann ein Toleranzschlauch, welcher hinsichtlich der Position am Werkstück variiert (vgl. Schwankung der Grenze 33). Anschließend wird ein Fingerabdruck 30 eines Werkstücks gefertigt. In FIG 2 ist im Fingerabdruck 30 ebenfalls zu erkennen, wie bei einer Fräsbearbeitung die Drehzahl der Spindel (y-Asche) über der Bahn (x-Achse) am Werkstück variiert. Die Bahn wäre bei einer einfachen Bewegung wie in Richtung der X-Achse der Maschine definiert durch eine Gerade parallel zur X-Achse. Da jedoch auch beim Referenzwerkstück die Spindeldrehzahl über der Werkstückposition mit unterschiedlichen Amplituden schwankt, ist der variierende Toleranzschlauch hinsichtlich dieser Variation erklärbar und plausibel.

Die Prozessgrößen, z.B. momentenbildender Strom der Spindel, mit Beschleunigungssensor an der Spindel erfasste Schwingung der Hauptspindel oder Regelabweichung einer prozessnahen Achse, können durch den Anwender z.B. den Betreiber/Hersteller, frei definiert werden. Für den Anwender kann auch die Definition von Prozessgrößen interessant sein, die sich aus den verfügbaren Signalen der Steuerungseinheit 2 (FIG 1) ableiten lassen. So wäre es denkbar, aus den Strömen der Vorschubachsen unter Kenntnis der Transformation, der bewegten Massen und ggf. der Reibung auf den Kraftvektor am TCP zu schließen. Der von der Kontur abdrängende Anteil des Kraftvektors kann ebenso von Interesse sein, da dieser maßgeblich die Genauigkeit bestimmt. Aus solch einer errechneten Größe kann dann der Toleranzschlauch über dem Werkstück definiert werden. Mit Kenntnis der Steifigkeit der Werkzeugmaschine 1 (FIG 1) am TCP lässt sich aus einem errechneten Kraftvektor sogar die Verdrückung am TCP bestimmen. Damit kann die Genauigkeit über dem Werkstück unter dem Einfluss von Prozesskräften aus den verfügbaren Signalen der Steuerung ermittelt und zur Definition eines Toleranzschlauchs verwendet werden.

Somit werden durch den werkstückspezifischen Fingerabdruck 30, die durch den Anwender definierten Prozessgrößen bezogen auf den Bearbeitungsort, transparent.

Durch den Vergleich des aktuellen Fingerabdrucks mit den Grenzen 33, lässt sich in FIG 2 dann eine Toleranzverletzung 34 erkennen.

Die Steuerungseinheit 2 (FIG 1) kann dabei aus einer solchen Toleranzverletzung 34 eigenständig Maßnahmen einleiten. Werden die Grenzwerte 33 überschritten, so kann die Steuerung z.B. die Bearbeitung abbrechen und einen Alarm absetzen. Auch wäre es denkbar, dass die Bearbeitung zwar fortgeführt wird, aber aus dem Fingerabdruck 30 (und der Toleranzverletzung 34) dieses Werkstücks deutlich erkennbar ist, dass eine Nachbearbeitung im Sinne der Qualitätssicherung erforderlich ist.

Auch ist eine eigenständige Einhaltung der Grenzwerte 33, möglich.

FIG 3 zeigt hierzu einen prinzipiellen Prozessregelkreis 35 zur Regelung des Bearbeitungsprozesses um die Einhaltung der definierten Grenzen 33 zu gewährleisten. Dieser weist einen Grenzwert 33, einen Regler 36, eine Stellgröße 37 sowie einen Prozess mit einer Prozessgröße 38 auf. Solche Regelkreise 35 sind heute bereits im Einsatz. Allerdings ist die Sollgröße bei heutigen Verfahren ein fest definierter Grenzwert. Im Gegensatz hierzu variieren die Sollwerte für den obigen Regelkreis 35, da diese aus dem Referenzfingerabdruck des Referenzwerkstücks stammen und somit über den Bearbeitungsort variieren (können). D.h. die Grenze 33 aus dem Referenzfingerabdruck variiert abhängig vom Bearbeitungsort am Werkstück.

Auch ist es natürlich möglich, solche Maßnahmen zu ergreifen, die pauschal bei einer Verletzung der Grenzen auf einen sicheren Bearbeitungsmode, z.B. durch Halbieren der Zustellung, umstellen.

FIG 4 zeigt als Visualisierung eine 3D-Ansicht eines solchen werkstückspezifischen Fingerabdrucks 30 einer Spindelleistung.

Der werkstückspezifische Fingerabdruck 30 mit all seinen zu dem technologischen Prozess gehörenden Bearbeitungsdaten kann in einer entsprechenden Darstellung aufbereitet werden, z. B. als 3D-Ansicht des Werkstücks mit geeigneter Darstellung des technologisch relevanten Prozessparameters.

Zweckmäßigerweise wird die erfindungsgemäße Steuerungseinheit 2 (FIG 1) um ein integriertes oder auf einer externen Einheit (z.B. PC oder Workstation), d.h. innerhalb oder außerhalb der Steuerungseinheit 2 (FIG 1) lauffähiges Mittel zur Visualisierung des erfindungsgemäßen werkstückspezifischen Fingerabdrucks 30, ergänzt. Das bedeutet, dass die Visualisierungsprogramme zumindest auf PCs in der Arbeitsvorbereitung oder der Qualitätskontrolle lauffähig sein müssen.

Mittels einer derartigen Visualisierung, wie in FIG 4 dargestellt, ist für einen Technologen mit seinem Expertenwissen in besonders einfacher Weise erkennbar, an welchen Stellen Optimierungen möglich sind. So ist hier z.B. erkennbar, dass für einen homogenen Materialabtrag die Leistung in einem schmalen Toleranzband sein müssen und wo sich hierzu kritische Stellen bilden.

Die Steuerungseinheit 2 (FIG 1) wird als zentraler Sammelpunkt für den Fingerabdruck 30 genutzt, weil damit der konsistente Bezug zu Ort und Prozess gegeben ist. Die Steuerungseinheit 2 ist in der Lage, alle diese Bearbeitungsdaten konsistent weiter zu verarbeiten, zu verdichten und mit Bezug zum Ort und Prozess auszugeben.

In einer bevorzugten Ausgestaltung wird der werkstückspezifische Fingerabdruck 30 deshalb in der Steuerungseinheit 2 selbst gespeichert. Auch kann er jedoch z.B. an eine externe Datenanlage gesendet werden.

FIG 5 beschreibt eine weitere erfindungsgemäße Steuerungseinheit mit einem Steuerprogramm 100. Das Steuerprogramm 100 stellt beispielsweise einen Ablauf für eine Werkzeugmaschine zur Verfügung.

Das Steuerprogramm 100 wird zunächst einer ersten Datenverarbeitung 110 unterzogen. Diese erste Datenverarbeitung 110 stellt eine erste zeitliche Zeitebene des Steuerprogramms 100 dar. Ziel der ersten Datenverarbeitung ist ein erster aufbereiteter Datensatz 120, der durch das Steuerprogramm 100 zur Verfügung gestellten Bearbeitungsdaten. Dies kann z.B. durch Beaufschlagung der Bearbeitungsdaten des Steuerprogramms 100 mit Basisbefehlssätzen oder Bewegungskommandos bewirkt werden. Dabei kann der erste Datensatz 110 z.B. in mehreren Millisekunden ablaufen. Unter Verwendung des Steuerungsprogramms 100 und des ersten Datensatz 110 wird nun als zweite Datenverarbeitung 210 eine Interpolation realisiert. Durch diese Interpolation wird ein zweiter Datensatz 220, der z.B. in wenigen Millisekunden abläuft, generiert. Dieser zweite Datensatz 220 stellt eine zweite zeitliche Zeitebene innerhalb des Gesamtsystems dar. Dabei können die zeitlichen Zeitebenen zeitlich getaktet oder asynchron sein. Selbstverständlich sind noch weitere zeitliche Zeitebenen vorhanden, die jedoch nicht genauer beschrieben werden. Das Steuerprogramm 100 weist generierte Bearbeitungsdaten als auch bereitgestellte Bearbeitungsdaten auf. Letzteres kann z.B. eine Auftragsnummer sein, die von einem CAD/CAM-System in das Steuerprogramm 100 einfließen und dort auch nicht mehr verändert werden. Generierte Bearbeitungsdaten sind z.B. die Bahnpunkte, die zwischen zwei von dem CAD/CAM System vergebenen Bearbeitungspunkten in die Steuerungseinheit 200 anhand von z.B. Splines erzeugt werden müssen.

Erfindungsgemäß werden die, aus den zumindest zwei unterschiedlichen Zeitebenen generierten und bereitgestellten relevanten Bearbeitungsdaten mit einem Ortsstempel 200 konsistent zu einem Bearbeitungsdatensatz 250 verknüpft. Auch hier wurde zusätzlich ebenfalls ein Zeitstempel 190 hinzugefügt. Dieser Bearbeitungsdatensatz 250 kann als eine Datei ausgestaltet sein.

Erfindungsgemäß wird somit ein werkstückspezifischer Fingerabdruck 300 durch ein taktsynchrones Aufzeichnen von relevanten Bearbeitungsdaten über die verschiedene Zeitebenen für das bearbeitete Werkstück bestimmt. Dabei kann das taktsynchrone Aufzeichnen durch den Zeitstempel 190 den einen Ortsstempel 200, mit dem die Bearbeitungsdaten aus den verschiedenen Zeitebenen versehen werden, bewerkstelligt werden. Durch den Ortsstempel 200 und den Zeitstempel 190 wird quasi ein Prozessbezug hinsichtlich des aktuell bearbeiteten Punkts im Steuerprogramm 100 hergestellt.

Durch einen werkstückspezifischen Fingerabdruck 30,300 ist es also möglich, einen Vergleich automatisiert in Echtzeit, während der Bearbeitung, durchzuführen und bei Abweichungen definierte Maßnahmen, wie z.B. Alarm und Bearbeitungsstopp oder Vorschubreduktion, einzuleiten. Zudem kann der Vergleich nach jeder Bearbeitung durchgeführt werden. Somit können Toleranzen und Grenzwerte ermittelt und überwacht werden. Diese Auswertungen können durch geeignete Visualisierungen auch manuell ausgewertet werden.

Durch die Erfindung ist eine konsistente Datengenerierung und Verarbeitung von Echtzeitprozessdaten bei der Werkstückbearbeitung mit Werkzeugmaschinen 1 (FIG 1) möglich.

Erfindungsgemäß entsteht ein werkstückspezifischer Fingerabdruck 30,300 des Werkstücks mit allen für relevant gesehenen Prozessparametern. Der Anwender eines Produktionsprozesses kann somit aus dem werkstückspezifischen Fingerabdruck 30,300 Aussagen zur Prozessstabilität, zu Bearbeitungsqualität und zum Verschleiß von Produktionsmitteln generieren.

## Patentansprüche

1. Steuerungseinheit (2) zur Steuerung einer Werkzeugmaschine (1), wobei die Steuerungseinheit (2) dazu ausgebildet ist, durch ein Steuerprogramm (10,100) einen werkstückspezifischen Bearbeitungsprozess anhand von Bearbeitungsdaten durchzuführen,
**dadurch gekennzeichnet, dass** die für den Bearbeitungsprozess vorab definierten relevanten Bearbeitungsdaten mit einem Ortsstempel (20,200) konsistent zu einem Bearbeitungsdatensatz (25,250) verknüpfbar sind und durch zumindest den Bearbeitungsdatensatz (25,250) ein werkstückspezifischer Fingerabdruck (30,300) des Werkstücks bestimmbar ist.

2. Steuerungseinheit (2) zur Steuerung einer Werkzeugmaschine (1) nach Anspruch 1,
**dadurch gekennzeichnet, dass** der Ortsstempel (20,200) durch Werkstückkoordinaten in einem werkstückbezogenen Koordinatensystem angebbar ist.

3. Steuerungseinheit (2) zur Steuerung einer Werkzeugmaschine (1) nach Anspruch 2,
**dadurch gekennzeichnet, dass** der Ortsstempel (20,200) durch Werkstückkoordinaten in einem werkstückbezogenen Koordinatensystem als Soll- und/oder Istwert in Echtzeit verfügbar ist.

4. Steuerungseinheit (2) zur Steuerung einer Werkzeugmaschine (1) nach Anspruch 2,
**dadurch gekennzeichnet, dass** der Ortsstempel (20,200) durch Werkstückkoordinaten in einem werkstückbezogenen Koordinatensystem durch Nachbearbeitung des konsistent abgespeicherten Bearbeitungsdatensatzes (25,250) als Soll- und/oder Istwert bestimmbar, insbesondere errechenbar, ist.

5. Steuerungseinheit (2) zur Steuerung einer Werkzeugmaschine nach einem der vorhergehenden Ansprüche,
**dadurch gekennzeichnet, dass** die für den Bearbeitungsprozess vorab definierten relevanten Bearbeitungsdaten zusätzlich mit einem Zeitstempel (19,190) zeitlich konsistent zu einem Bearbeitungsdatensatz (25,250) verknüpfbar sind.

6. Steuerungseinheit (2) zur Steuerung einer Werkzeugmaschine (1) nach einem der vorhergehenden Ansprüche,
**dadurch gekennzeichnet, dass** eine Speichereinheit zur Speicherung des Bearbeitungsdatensatzes (25, 250) vorgesehen ist, welche in der Steuerungseinheit (2) fest integriert ist.

7. Steuerungseinheit (2) zur Steuerung einer Werkzeugmaschine (1) nach einem der vorhergehenden Ansprüche,
**dadurch gekennzeichnet, dass** durch ein Referenzwerkstück ein Referenzbearbeitungsdatensatz erzeugbar ist, mit welchem ein Referenzfingerabdruck des Referenzwerkstücks bestimmbar ist.

8. Steuerungseinheit (2) zur Steuerung einer Werkzeugmaschine (1) nach einem der vorhergehenden Ansprüche,
**dadurch gekennzeichnet, dass** eine Vorverarbeitung des Bearbeitungsdatensatzes (25,250) in der Steuerungseinheit (2) vorgesehen ist.

9. Steuerungseinheit (2) zur Steuerung einer Werkzeugmaschine (1) nach einem der vorhergehenden Ansprüche,
**dadurch gekennzeichnet, dass** der werkstückspezifische Fingerabdruck (30,300) in Echtzeit errechnet wird.

10. Steuerungseinheit (2) zur Steuerung einer Werkzeugmaschine (1) nach einem der vorhergehenden Ansprüche,
**dadurch gekennzeichnet, dass** innerhalb oder außerhalb der Steuerungseinheit (2) Mittel zur Visualisierung des werkstückspezifischen Fingerabdrucks (30,300) zur Verfügung stehen.

11. Steuerungseinheit (2) zur Steuerung einer Werkzeugmaschine (1) nach einem der vorhergehenden Ansprüche,
**dadurch gekennzeichnet, dass** die relevanten Bearbeitungsdaten vom Anwender festlegbar, insbesondere vorab festlegbar, sind.

12. Steuerungseinheit (2) zur Steuerung einer Werkzeugmaschine (1) nach einem der vorhergehenden Ansprüche,
**dadurch gekennzeichnet, dass** für den werkstückspezifischen Fingerabdruck (30,300) Grenzwerte (33) definierbar sind.

13. Steuerungseinheit (2) zur Steuerung einer Werkzeugmaschine (1) nach Anspruch 12,
**dadurch gekennzeichnet, dass** für einen werkstückspezifischen Fingerabdruck (30,300) die Grenzwerte (33) bezogen auf das werkstückspezifische Koordinatensystem definierbar sind.

14. Steuerungseinheit (2) zur Steuerung einer Werkzeugmaschine (1) nach einem der vorhergehenden Ansprüche 12 oder 13,
**dadurch gekennzeichnet, dass** die Einhaltung der werkstückspezifischen Grenzwerte (33) während der Bearbeitung durch die Steuerungseinheit (2) überwachbar sind.

15. Steuerungseinheit (2) zur Steuerung einer Werkzeugmaschine (1) nach einem der vorhergehenden Ansprüche 12-14,
**dadurch gekennzeichnet, dass** eine Gewährleistung der eigenständigen Einhaltung der werkstückspezifischen Grenzwerte (33) während der Bearbeitung durch die Steuerungseinheit (2) bewerkstelligbar ist.

16. Steuerungseinheit (2) zur Steuerung einer Werkzeugmaschine (1) nach einem der vorhergehenden Ansprüche 12-15,
**dadurc**h **gekennzeichnet**, dass bei Verletzung der werkstückspezifischen Grenzwerte (33) während der Bearbeitung eine Unterbrechung der Bearbeitung durch die Steuerungseinheit (2) erfolgbar ist.

17. Steuerungseinheit (2) zur Steuerung einer Werkzeugmaschine (1) nach einem der vorhergehenden Ansprüche,
**dadurch gekennzeichnet, dass** das Steuerprogramm (10,100) zumindest zwei unterschiedliche Datenverarbeitungsebenen auf zumindest zwei unterschiedlichen Zeitebenen zur Generierung und Bereitstellung der Bearbeitungsdaten aufweist und die Bearbeitungsdaten aus den zumindest zwei unterschiedlichen Zeitebenen der Steuerung mit einem Ortsstempel (20,200) konsistent zu dem Bearbeitungsdatensatz (25,250) verknüpfbar sind.

18. Verfahren zur Generierung eines Bearbeitungsdatensatzes (25,250) für eine Steuerungseinheit (2) einer Werkzeugmaschine (1), wobei die Steuerungseinheit (2) durch ein Steuerprogramm (10, 100) einen werkstückspezifischen Bearbeitungsprozess anhand von Bearbeitungsdaten durchführt,
**dadurch gekennzeichnet, dass** die für den Bearbeitungsprozess vorab definierten relevanten Bearbeitungsdaten mit einen Ortsstempel (20,200) konsistent zu einem Bearbeitungsdatensatz (25,250) verknüpft werden und durch zumindest den Bearbeitungsdatensatz (25,250) ein werkstückspezifischer Fingerabdruck (30,300) des Werkstücks bestimmt wird.

19. Verfahren zur Generierung eines Bearbeitungsdatensatzes (25,250) nach Anspruch 18,
**dadurch gekennzeichnet, dass** der Ortsstempel (20,200) durch Werkstückkoordinaten in einem werkstückbezogenen Koordinatensystem angegeben wird.

20. Verfahren zur Generierung eines Bearbeitungsdatensatzes (25,250) nach Anspruch 19,
**dadurch gekennzeichnet, dass** der Ortsstempel (20,200) durch Werkstückkoordinaten in einem werkstückbezogenen Koordinatensystem als Soll- und/oder Istwert in Echtzeit ausgebildet wird.

21. Verfahren zur Generierung eines Bearbeitungsdatensatzes (25,250) nach Anspruch 19,
**dadurch gekennzeichnet, dass** der Ortsstempel (20,200) durch Werkstückkoordinaten in einem werkstückbezogenen Koordinatensystem durch Nachbearbeitung des konsistent abgespeicherten Bearbeitungsdatensatzes (25,250) als Soll- und/oder Istwert bestimmt, insbesondere errechnet werden.

22. Verfahren zur Generierung eines Bearbeitungsdatensatzes (25,250) nach einem der vorhergehenden Ansprüche 18-21,
**dadurch gekennzeichnet, dass** die für den Bearbeitungsprozess vorab definierten relevanten Bearbeitungsdaten zusätzlich mit einem Zeitstempel (19,190) zeitlich konsistent zu einem Bearbeitungsdatensatz (25,250) verknüpft werden.

23. Verfahren zur Generierung eines Bearbeitungsdatensatzes (25,250) nach einem der vorhergehenden Ansprüche 18-22,
**dadurch gekennzeichnet, dass** durch ein Referenzwerkstück ein Referenzbearbeitungsdatensatz erzeugbar ist, mit welchem ein Referenzfingerabdruck des Referenzwerkstücks bestimmt wird.

24. Verfahren zur Generierung eines Bearbeitungsdatensatzes (25,250) nach einem der vorhergehenden Ansprüche 18-23,
**dadurch gekennzeichnet, dass** der werkstückspezifische Fingerabdruck in Echtzeit errechnet wird.

25. Verfahren zur Generierung eines Bearbeitungsdatensatzes (25,250) nach einem der vorhergehenden Ansprüche 18-24,
**dadurch gekennzeichnet, dass** für den werkstückspezifischen Fingerabdruck (30,300) Grenzwerte (33) definiert werden.

26. Verfahren zur Generierung eines Bearbeitungsdatensatzes (25,250) nach einem Anspruch 25,
**dadurch gekennzeichnet, dass** für einen werkstückspezifischen Fingerabdruck (30,300) die Grenzwerte (33) bezogen auf das werkstückspezifische Koordinatensystem definierbar sind.

27. Verfahren zur Generierung eines Bearbeitungsdatensatzes (25,250) nach einem der Ansprüche 18-26, welches mittels einer Steuerungseinheit (2) nach einem der Ansprüche 1-17 durchgeführt wird.

28. Verwendung eines gemäß Anspruch 18-27 bestimmten werkstückspezifischen Fingerabdrucks eines Werkstücks zur Bestimmung von Abweichungen des Werkstücks.
